# EUROPÄISCHE PATENTSCHRIFT

(11) **EP 3 049 450 B1**
(45) Veröffentlichungstag und Bekanntmachung des Hinweises auf die Patenterteilung: **08.11.2017**
(21) Anmeldenummer: 14772141.9
(22) Anmeldetag: 23.09.2014
(51) Int. Cl.: C08F 261/04, C08F 220/18

(54) **VERWENDUNG VON MODIFIZIERTEN WASSERLÖSLICHEN POLYMEREN ALS VERNETZUNGSHILFSMITTEL**
USE OF MODIFIED WATER-SOLUBLE POLYMERS AS CROSSLINKING AUXILIARY AGENTS
UTILISATION DE POLYMÈRES HYDROSOLUBLES MODIFIÉS EN TANT QU'AGENTS DE RÉTICULATION

(30) Priorität: 25.09.2013 DE 102013219325
(43) Veröffentlichungstag der Anmeldung: 03.08.2016
(73) Patentinhaber: Wacker Chemie AG, 81737 München (DE)
(72) Erfinder: HASHEMZADEH, Abdulmajid, 84489 Burghausen (DE)
(74) Vertreter: Ege, Markus
(86) Internationale Anmeldenummer: PCT/EP2014/070283
(87) Internationale Veröffentlichungsnummer: WO 2015/044153

(56) Entgegenhaltungen:
- EP-A1- 0 896 029

## Beschreibung

Die Erfindung betrifft die Verwendung von modifizierten wasserlöslichen Polymeren als Vernetzungshilfsmittel, gegebenenfalls in Kombination mit filmbildenden Polymeren, Epoxid-Komponenten oder sonstigen Härtern, beispielsweise für Beschichtungsmittel oder Klebemittel, wie Faserbeschichtungsmittel, Papierbeschichtungsmittel oder bauchemische Produkte.

Wasserlösliche Polymere, wie beispielsweise Polyvinylalkohole, finden vielfache Anwendung unter anderem als Additive für Beschichtungsmittel oder Adhesive und insbesondere als Schutzkolloid für Polymere auf Basis ethylenisch ungesättigter Monomere. Die hohe Wasserlöslichkeit solcher Polymere macht sich allerdings bei Wasserbeanspruchung von Anwendungsprodukten oftmals negativ bemerkbar. Zur Verbesserung der Wasserbeständigkeit wurden wasserlösliche Polymere enthaltende Zusammensetzungen beispielsweise in Kombination mit Härtern oder Vernetzern appliziert. So wurden für die Vernetzung von Polyvinylalkohol bei Raumtemperatur Vernetzer mit Isocyanat- oder Aldehyd-Gruppen verwendet. Nach Vernetzung ist die Wasserbeständigkeit der Produkte verbessert, allerdings sind solche Vernetzer gesundheitlich bedenklich, was bei deren Anwendung höhere Sicherheitsmaßnahmen erforderlich macht. Zudem verläuft die Vernetzung für gewöhnlich nicht vollständig, so dass aus den Anwendungsprodukten über lange Zeiträume hinweg gesundheitsschädliche Verbindungen freigesetzt werden können.

Als weitere Vernetzungssysteme sind Epoxy-Gruppen haltige Verbindungen bekannt, die allerdings erst bei höheren Temperaturen, beispielsweise über 100°C, zur Vernetzung führen. Bei vielen Anwendungen, beispielsweise bei Bauanwendungen, wie Fliesenkleber oder Verlaufsmassen, hat die Vernetzung aber schon bei Raumtemperatur zu erfolgen. Zur Raumtemperatur-Vernetzung von Epoxy-Gruppen haltigen Verbindungen können zusätzlich Amine zugesetzt werden. Bei dieser Vorgehensweise werden die wasserlöslichen Polymere nicht hinreichend vernetzt und die Nassfestigkeit daraus hergestellter Produkte kann noch nicht voll befriedigen.

Als Vernetzer werden vielfach Epoxy-Harze empfohlen, insbesondere auch für Schutzkolloid-stabilisierte Polymerpulver, wie beispielsweise in der WO 2012/177448, der US 2012/0329909, der US 2012/0329908, der US 2012/0329907 oder der WO 2010/086217 beschrieben. Die EP 0721004 beschreibt in Wasser redispergierbare Polymerpulver enthaltend filmbildende, funktionalisierte Polymere sowie reaktive Verbindungen, wobei die reaktiven Verbindungen zur Vernetzung mit den funktionalisierten Polymeren geeignet sind. Die US 2001/0024644 beschreibt Schutzkolloid-stabilisierte Polymerpulver, deren Basispolymere Epoxy-Monomer-Einheiten enthalten. Die EP 0896029 lehrt vernetzbare Polymerzusammensetzungen auf Basis von Wasser unlöslichen Polymeren sowie Wasser löslichen Polymeren, wobei zumindest eine der beiden Polymere vernetzbare Gruppen enthält, die mit unlöslichen organischen oder anorganischen Feststoffen kovalente Bindungen eingehen können.

Die EP 0885246 offenbart die Verwendung von wasserlöslichen Polymeren auf Basis von 2-Acrylamido-2-methylpropansulfonsäure (AMPS) und N-Methylolacrylamidlösung (NMA) als Schutzkolloide für wasserunlösliche Polymere. Derartige Schutzkolloide neigen allerdings zur Formaldehyd-Freisetzung, was aus gesundheitlichen Gründen verpönt ist. Zudem sind Schutzkolloide auf Basis solcher Monomere nicht wasserbeständig. Die EP 0723975 beschreibt die Copolymerisation von ethylenisch ungesättigten Epoxiden sowie weiterer ethylenisch ungesättigter Monomere in Gegenwart geringer Mengen an Schutzkolloiden sowie den Einsatz solcher Produkte in Beschichtungsmitteln oder Bindemitteln zur Verbesserung von deren adhesiven Eigenschaften. Für filmbildende Polymerisate lehrt die DE-A 102012223620 schließlich Schutzkolloide, die erhältlich sind mittels Polymerisation von gegebenenfalls funktionalisierten ethylenisch ungesättigten Monomeren in Gegenwart von wasserlöslichen Polymeren.

Ein weiteres Problem besteht in der unzureichenden Verschmutzungsresistenz der oben skizzierten Beschichtungen, beispielsweise auf Kontakt mit Farbstoff-haltigen Getränken, wie z.B. Fruchtsäften oder Kaffee.

Vor diesem Hintergrund bestand die Aufgabe in der Bereitstellung neuer Maßnahmen zur Herstellung von möglichst wasserbeständigen Beschichtungen. Auf Formaldehyd freisetzende Vernetzungshilfsmittel sollte hierbei verzichtet werden können. Die Vernetzungshilfsmittel sollten auch ohne Zusatz von gängigen Vernetzern vernetzbar sein, aber nach Möglichkeit auch mit den gängigen Vernetzern kompatibel sein und unter Einwirkung solcher gängiger Vernetzer in vorteilhafter Weise vernetzen. Zudem sollten die Vernetzungshilfsmittel zu Anwendungsprodukten mit verbesserter Verschmutzungsresistenz führen, beispielsweise gegenüber Farbstoff-haltigen Getränken, wie Fruchtsäften oder Kaffee, bzw. zu Anwendungsprodukten, von denen Verschmutzungen leichter oder vollständiger entfernbar sind. Die eingangs genannten Probleme sollten nach Möglichkeit nicht oder nach Möglichkeit in verringertem Maße auftreten.

Überraschenderweise wurde diese Aufgabe gelöst, indem auf bestimmte Weise modifizierte wasserlösliche Polymere als Vernetzungshilfsmittel eingesetzt wurden.

Gegenstand der Erfindung ist die Verwendung von modifizierten wasserlöslichen Polymeren als Vernetzungsmittel, dadurch gekennzeichnet, dass die modifizierten wasserlöslichen Polymere erhältlich sind durch radikalisch initiierte Polymerisation von
a) einem oder mehreren ethylenisch ungesättigten Monomeren, die ein oder mehrere Epoxid-, Amin-, Carbonsäure-, Carbonsäureanhydrid- und/oder Silan-Gruppen tragen, und
b) einem oder mehreren, von den Monomeren a) verschiedenen ethylenisch ungesättigten Monomeren
   in Gegenwart von 25 bis 80 Gew.-% an einem oder mehreren wasserlöslichen Polymeren, bezogen auf das Gesamtgewicht der modifizierten wasserlöslichen Polymere.

Die ethylenisch ungesättigten Monomeren, die ein oder mehrere Epoxid-, Amin-, Carbonsäure- und/oder CarbonsäureanhydridGruppen tragen, haben bevorzugt 1 bis 20 C-Atome, besonders bevorzugt 1 bis 10 C-Atome, die linear oder verzweigt, offenkettig oder cyclisch angeordnet sein können. Bei den Amin-Gruppen tragenden ethylenisch ungesättigten Monomeren kann es sich um primäre, sekundäre oder tertiäre Amine handeln.

Beispiele für ethylenisch ungesättigte Monomere, die ein oder mehrere Epoxid-Gruppen tragen (Epoxy-funktionelle Monomere), sind Glycidylacrylat, Glycidylmethacrylat (GMA) oder Allylglycidylether; besonders bevorzugt sind Glycidylacrylat und Glycidylmethacrylat; am meisten bevorzugt ist Glycidylmethacrylat.

Beispiele für ethylenisch ungesättigte Monomere, die ein oder mehrere Amin-Gruppen tragen (Amin-funktionelle Monomere), sind 2-Dimethylaminoethylmethacrylat, 2-tert. Butylaminoethylmethacrylat, Allyl-N-(2-aminoethyl)-carbamat-hydrochlorid, Allyl-N-(6-aminohexyl)-carbamat-hydrochlorid, Allyl-N-(3-aminopro-pyl)-hydrochlorid, Allylamin oder Vinylpyridin.

Beispiele für ethylenisch ungesättigte Monomere, die ein oder mehrere Carbonsäure-Gruppen tragen (Carbonsäure-funktionelle Monomere), sind ethylenisch ungesättigte Mono- oder Dicarbonsäuren, vorzugsweise Acrylsäure, Methacrylsäure, Fumarsäure und Maleinsäure; Monoester der Fumarsäure oder Maleinsäure, wie die Diethyl- oder Diisopropylester. Ein Beispiel für ein ethylenisch ungesättigtes Monomer, das eine Carbonsäureanhydrid-Gruppe trägt (Carbonsäureanhydrid-funktionelles Monomer), ist Maleinsäureanhydrid.

Ethylenisch ungesättigte Monomere, die ein oder mehrere Silan-Gruppen tragen (Silan-funktionelle Monomere), sind beispielsweise ethylenisch ungesättigte Siliciumverbindungen der allgemeinen Formel R¹SiR²₀₋₂(OR³)₁₋₃, wobei R¹ die Bedeutung CH₂=CR⁴-(CH₂)₀₋₁ oder CH₂=CR⁴CO₂(CH₂)₁₋₃ hat, R² die Bedeutung C₁- bis C₃-Alkylrest, C₁- bis C₃-Alkoxyrest oder Halogen, vorzugsweise Cl oder Br hat, R³ ein unverzweigter oder verzweigter, gegebenenfalls substituierter Alkylrest mit 1 bis 12 C-Atomen, vorzugsweise 1 bis 3 C-Atomen, ist oder ein Acylrest mit 2 bis 12 C-Atomen ist, wobei R³ gegebenenfalls durch eine Ethergruppe unterbrochen sein kann, und R⁴ für H oder CH₃ steht.

Bevorzugte Silan-funktionelle Monomere sind γ-Acryl- bzw. γ-Methacryloxypropyltri(alkoxy)silane, α-Methacryloxymethyltri(-alkoxy)silane, γ-Methacryloxypropyl-methyldi(alkoxy)silane; Vinylsilane wie Vinylalkyldi(alkoxy)silane und Vinylt-ri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können. Beispiele für bevorzugte silanhaltige Monomere sind 3-Methacryloxypropyltrimethoxysilan, 3-Methacryloxypropylmethyldimethoxysilan, Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, Methacryloxymethyltrimethoxysilan, 3-Methacryloxypropyl-tris(2-methoxyethoxy)silan, Vinyltrichorsilan, Vinylmethyldichlorsilan, Vinyltris-(2-methoxyethoxy)-silan, Trisacetoxyvinylsilan, Allylvinyltrimethoxysilan, Allyltriacetoxysilan, Vinyldimethylmethoxysilan, Vinyldimethylethoxysilan, Vinylmethyldiacetoxysilan, Vinyldimethylacetoxysilan, Vinylisobutyldimethoxysilan, Vinyltriisopropyloxysilan, Vinyltributoxysilan, Vinyltrihexyloxysilan, Vinylmethoxydihexoxysilan, Vinyltrioctyloxysilan, Vinyldimethoxyoctyloxysilan, Vinylmethoxydioctyloxysilan, Vinylmethoxydilauryloxysilan, Vinyldimethoxylauryloxysilan sowie auch Polyethylenglykolmodifizierte Vinylsilane.

Als Silan-funktionelle Monomere werden am meisten bevorzugt Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-meth-oxyethoxy)silan, 3-Methacryloxypropyltrimethoxysilan, 3-Methacryloxypropylmethyldimethoxysilan und Methacryloxymethyltrimethoxysilan sowie deren Gemische.

Geeignete Silan-funktionelle Monomere sind auch Silan-Gruppen enthaltene (Meth)acrylamide, der allgemeinen Formel CH₂= CR⁵-CO-NR⁶-R⁷-SiR⁸n-(R⁹)₃₋ₘ, wobei n= 0 bis 4, m= 0 bis 2, R⁵ entweder H oder eine Methyl-Gruppe ist, R⁶ H ist oder eine Alkyl-Gruppe mit 1 bis 5 C-Atomen ist; R⁷ eine Alkylen-Gruppe mit 1 bis 5 C-Atomen oder eine bivalente organische Gruppe in welcher die Kohlenstoffkette durch ein O- oder N-Atom unterbrochen wird, ist, R⁸ eine Alkyl-Gruppe mit 1 bis 5 C-Atomen ist, R⁹ eine Alkoxy-Gruppe mit 1 bis 40 C-Atomen ist, welche mit weiteren Heterocyclen substituiert sein können. In Monomeren, in denen 2 oder mehrere R⁵ oder R⁹- Gruppen vorkommen, können diese identisch oder unterschiedlich sein.

Beispiele für solche (Meth)acrylamido-alkylsilane sind: 3-(Meth)acrylamido-propyltrimethoxysilan, 3-(Meth)acrylamido-propyltriethoxysilan, 3-(Meth)acrylamido-propyltri(β-methoxy-ethoxy)silan, 2-(Meth)acrylamido-2-methylpropyltrimethoxy-silan, 2-(Meth)acrylamido-2-methylethyltrimethoxysilan, N-(2-(Meth)acrylamido-ethyl)aminopropyltrimethoxysilan, 3-(Meth)-acrylamido-propyltriacetoxysilan, 2-(Meth)acrylamido-ethyl-trimethoxysilan, 1-(Meth)acrylamido-methyltrimethoxysilan, 3-(Meth)acrylamido-propylmethyldimethoxysilan, 3-(Meth)acryl-amido-propyldimethylmethoxysilan, 3-(N-Methyl-(Meth)acryl-amido)-propyltrimethoxysilan, 3-((Meth)acrylamido-methoxy)-3-hydroxypropyltrimethoxysilan, 3-((Meth)acrylamido-methoxy)-propyltrimethoxysilan, N,N-Dimethyl-N-trimethoxysilylpropyl-3-(Meth)acrylamido-propylammoniumchlorid und N-N-Dimethyl-N-tri-methoxysilylpropyl-2-(Meth)acrylamido-2-methylpropylammonium-chlorid.

Die Monomere a) werden vorzugsweise in einer Menge von 0,5 bis 60 Gew.-%, besonders bevorzugt 1 bis 30 Gew.-% und am meisten bevorzugt 2 bis 20 Gew.-%, jeweils bezogen auf das Gesamtgewicht der modifizierten wasserlöslichen Polymere, eingesetzt.

Monomere b) werden vorzugsweise ausgewählt aus der Gruppe umfassend Vinylester, (Meth)acrylsäureester, Vinylaromaten, Olefine, 1,3-Diene und Vinylhalogenide. Besonders bevorzugte Monomere b) sind (Meth)acrylsäureester und Vinylaromaten.

Geeignete Vinylester sind beispielsweise solche von Carbonsäuren mit 1 bis 22 C-Atomen, insbesondere 1 bis 12 C-Atomen. Bevorzugt werden Vinylacetat, Vinylpropionat, Vinylbutyrat, Vinyl-2-ethylhexanoat, Vinyllaurat, Vinylmyristat, Vinylpalmitat, Vinylstearat, Vinylarachinat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Resolution). Besonders bevorzugt ist Vinylacetat.

Geeignete Acrylsäureester oder Methacrylsäureester sind beispielsweise Ester von unverzweigten oder verzweigten Alkoholen mit 1 bis 22 C-Atomen, insbesondere 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat, Laurylacrylat, Myristylacrylat, Stearylacrylat, Palmitylacrylat, Laurylmethacrylat, Myristylmethacrylat, Stearylmethacrylat oder Palmitylmethacrylat. Besonders bevorzugt sind Methylacrylat, Methylmethacrylat, n-Butylacrylat, t-Butylacrylat oder 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien oder Isopren.

Die Monomere b) werden vorzugsweise in einer Menge von 5 bis 73 Gew.-%, besonders bevorzugt 10 bis 65 Gew.-% und am meisten bevorzugt 20 bis 60 Gew.-%, jeweils bezogen auf das Gesamtgewicht der modifizierten wasserlöslichen Polymere, eingesetzt.

Gegebenenfalls können bei der radikalisch initiierten Polymerisation zur Herstellung der modifizierten wasserlöslichen Polymere noch ein oder mehrere ethylenisch ungesättigte, von den Monomeren a) und b) verschiedene Monomere c) eingesetzt werden.

Beispiele für Monomere c) sind ethylenisch ungesättigte Carbonsäureamide und -nitrile, vorzugsweise Acrylamid und Acrylnitril; Diester der Fumarsäure und Maleinsäure, wie die Diethyl- und Diisopropylester, ethylenisch ungesättigte Sulfonsäuren bzw. deren Salze, vorzugsweise Vinylsulfonsäure, 2-Acryl-amido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid oder Acetylacetoxyethylacrylat oder - methacrylat.

Die Monomere c) werden vorzugsweise zu 0,1 bis 10 Gew.-% und besonders bevorzugt 0,1 bis 5 Gew.-%, jeweils bezogen auf das Gesamtgewicht der modifizierten wasserlöslichen Polymere, eingesetzt. Am meisten bevorzugt werden keine Monomere c) eingesetzt.

Die wasserlöslichen Polymere weisen in Wasser bei einer Temperatur zwischen 20°C und 90°C und einem pH-Wert zwischen 3 und 12, insbesondere bei einem pH-Wert zwischen 3 und 9, im Allgemeinen eine Löslichkeit von mindestens 10 g/l auf.

Geeignete wasserlösliche Polymere sind beispielsweise Polymere enthaltend Einheiten von Vinylalkohol, Vinylpyrrolidonen, Vinylacetalen, ethylenisch ungesättigten Carbonsäuren, Acrylamiden, Vinylsulfonsäuren, ethylenisch ungesättigten Aminen oder Ammoniumverbindungen oder auch Polymere wie Polysaccharide in wasserlöslicher Form, Proteine, Ligninsulfonate oder Formaldehydsulfonate.

Bevorzugte wasserlösliche Polymere sind Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate, Dextrine und Cyclodextrine; Proteine wie Kasein oder Kaseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Cresolformaldehydsulfonate, Styrolmaleinsäure- und Vinylethermaleinsäure-Copolymere.

Bevorzugte Polyvinylalkohole sind auch Polyvinylalkohole enthaltend hydrophobe Monomereinheiten, beispielsweise verseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Monomereinheiten beträgt vorzugsweise 0,1 bis 10 Gew.-%, bezogen auf das Gesamtgewicht des jeweiligen Polyvinylalkohols.

Bei den Polyvinylalkoholen kann es sich auch um kationische Polyvinylalkohole oder anionische Polyvinylalkohole handeln. Kationische Schutzkolloide sind Polymere mit kationischer Ladung; anionische Schutzkolloide sind Polymere mit anionischer Ladung.

Beispiele für kationische Polyvinylalkohole sind Polymere, welche kationische Monomereinheiten enthalten, vorzugsweise Monomereinheiten mit quarternären Ammoniumgruppen, Sulfoniumgruppen und Phosphoniumgruppen. Bevorzugt werden verseifte Copolymerisate von Vinylacetat mit einem oder mehreren kationischen Comonomeren ausgewählt aus der Gruppe umfassend Allyl-Alkyl-Ammoniumhalogenide, (Meth)Acryloxy-Alkyl-Ammoniumhalogenide, (Meth)Acrylamido-Alkyl-Ammoniumhalogenide, Amino-Alkyl-(Meth)Acrylat und Amino-Alkyl-(Meth)Acrylamid, wobei die Alkylreste 1 bis 4 C-Atome enthalten können. Bevorzugte kationische Comonomere werden ausgewählt aus der Gruppe umfassend Diallyldiethylammoniumchlorid (DADEAC), (3-Methacryloxy)propyltrimethylammoniumchlorid (MPTAC),(3-Methacryloxy)ethyl-trimethylammoniumchlorid (METAC), (3-Methacrylamido)propyl-trimethyl-ammoniumchlorid (MAPTAC), 2-Dimethylaminoethylmethacrylat oder 3-Dimethylaminopropylmethacrylamid (DMAEMA oder DMAPMA bei pH ≤ 5 protonierte Spezies) und insbesondere Diallyldimethylammoniumchlorid (DADMAC). Am meisten bevorzugte Monomere c) sind Diallyldimethylammoniumchlorid (DADMAC), Diallyldi-ethylammoniumchlorid (DADEAC), (3-Methacryloxy)propyl-trimethylammoniumchlorid (MPTAC),(3-Methacryloxy)ethyltrimethylammoniumchlorid (METAC), (3-Methacrylamido)propyltrimethyl-ammoniumchlorid (MAPTAC). Die Herstellung von kationischen Polyvinylalkoholen ist beispielsweise in der EP1724288A1 oder in E.W. Flick, Water-Soluble Resins - an Industrial Guide, Noyes Publications, Park Ridge, N.J., 1991 beschrieben.

Der Anteil der kationischen Comonomere beträgt vorzugsweise 0,01 bis 30 Gew.-%, besonders bevorzugt 1 bis 15 Gew.-%, noch mehr bevorzugt 1 bis 10 Gew.-% und am meisten bevorzugt 1 bis 5 Gew.-%, jeweils bezogen auf das Gesamtgewicht der kationischen Polyvinylalkohole.

Beispiele für anionische Polyvinylalkohole sind Polymere, welche anionische Monomereinheiten enthalten, vorzugsweise Monomereinheiten mit Sulfat-, Sulfonsäure-, Phosphat-, Phosphonat- und Carbonsäure-Gruppen oder deren jeweiligen Salze. Besonders bevorzugte anionische Monomereinheiten tragen Phosphat-, Phosphonat- oder insbesondere Sulfonsäure- oder Carbonsäure-Gruppen. Bevorzugt werden verseifte Copolymerisate von Vinylacetat mit einem oder mehreren anionischen Comonomeren ausgewählt aus der Gruppe umfassend Vinylsulfonate, Allylsulfonate, ethylenisch ungesättigte Mono- oder Dicarbonsäuren, Monoester der Fumarsäure und Maleinsäure. Besonders bevorzugt werden Vinylsulfonate und ethylenisch ungesättigte Mono- oder Dicarbonsäuren. Insbesondere bevorzugt werden Vinylsulfonat, 2-Methyl-2-propen-1-sulfonsäure, Allylsulfonat, Acrylsäure, Methacrylsäure, Fumarsäure, Maleinsäure, Monoethyl- oder Monoisopropylester der Fumarsäure oder der Maleinsäure, oder die Salze der vorgenannten Säuren. Am meisten bevorzugt wird Vinylsulfonat. Die Herstellung von anionischen Polyvinylalkoholen ist beispielsweise in der WO06122705A beschrieben.

Der Anteil der anionischen Comonomere beträgt vorzugsweise 0,01 bis 30 Gew.-%, besonders bevorzugt 1 bis 20 Gew.-%, noch mehr bevorzugt 1 bis 15 Gew.-% und am meisten bevorzugt 1 bis 10 Gew.-%, jeweils bezogen auf das Gesamtgewicht der anionischen Polyvinylalkohole.

Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-%. Der Hydrolysegrad bezeichnet das Molverhältnis aus den Vinylalkohol-Einheiten und der Gesamtsumme aus den Vinylalkohol- und Vinylester-Einheiten des jeweiligen wasserlöslichen Polymers.

Die Polyvinylalkohole haben eine Höpplerviskosität von vorzugsweise 0,4 bis 30 mPas, besonders bevorzugt 0,4 bis 15 mPas, noch mehr bevorzugt von 0,5 bis 10 mPas und am meisten bevorzugt von 0,8 bis 6 mPas (bestimmt nach der Methode nach Höppler bei 20°C gemäß DIN 53015 in 4 %iger wässriger Lösung).

Polyvinylacetale sind durch teilweise oder vollständige Acetalisierung der teil- oder vollverseiften Polyvinylalkohole erhältlich. Die Herstellung der Polyvinylacetale erfolgt nach gängigen Verfahren durch Acetalisierung der genannten Polyvinylalkohole mit Aldehyden, wie beispielsweise in der DE-A 10140131 beschrieben. Bevorzugt sind Aldehyde aus der Gruppe der aliphatischen Aldehyde mit 1 bis 15 C-Atomen, insbesondere Formaldehyd, Acetaldehyd, Propionaldehyd und am meisten bevorzugt Butyraldehyd oder eine Mischung aus Butyr- und Acetaldehyd. Als aromatische Aldehyde können beispielsweise Benzaldehyd oder dessen Derivate verwendet werden. Der Acetalisierungsgrad der Polyvinylacetale kann durch die eingesetzte Menge an Aldehyd eingestellt werden. Denn da die Acetalisierung mit fast vollständigem Umsatz abläuft, kann die Zugabemenge durch einfache stöchiometrische Rechnung bestimmt werden.

Besonders bevorzugte wasserlösliche Polymere sind Polyvinylalkohole, insbesondere auch kationische Polyvinylalkohole oder anionische Polyvinylalkohole.

Zur Herstellung der modifizierten wasserlöslichen Polymere mittels Polymerisation werden die wasserlöslichen Polymere zu vorzugsweise 25 bis 80 Gew.-%, besonders bevorzugt 30 bis 70 Gew.-% und am meisten bevorzugt 35 bis 60 Gew.-%, jeweils bezogen auf das Gesamtgewicht der modifizierten wasserlöslichen Polymere, eingesetzt.

Im Zuge der Polymerisation zur Herstellung der modifizierten wasserlöslichen Polymere werden im Allgemeinen Monomer-Einheiten der Monomere a) und/oder der Monomere b) und/oder gegebenenfalls der Monomere c) an die wasserlöslichen Polymere gepfropft. Pfropfen bedeutet, dass Einheiten der ethylenisch ungesättigten Monomere über kovalente Bindungen an die wasserlöslichen Polymere gebunden werden.

Die Polymer-Einheiten basierend auf den Monomeren a), b) und gegebenenfalls c) der modifizierten, wasserlöslichen Polymere haben volumenmittlere Teilchengrößen von vorzugsweise 10 nm bis 200 nm, besonders bevorzugt von 30 nm bis 180 nm und am meisten bevorzugt von 40 nm bis 130 nm (Bestimmung mittels BeckmanCoulter LS 13320 (PIDS)). Diese Teilchengrößen sind besonders vorteilhaft hinsichtlich der stärkeren Haftung vernetzter modifizierter, wasserlöslicher Polymere auf Substraten.

Die modifizierten wasserlöslichen Polymere können beispielsweise mittels Emulsionspolymerisation der erfindungsgemäßen ethylenisch ungesättigten Monomere in Gegenwart von einem oder mehreren wasserlöslichen Polymeren hergestellt werden. Vorzugsweise erfolgt also keine Suspensionspolymerisation. Die Polymerisationstemperatur liegt vorzugsweise zwischen 40°C und 100°C, besonders bevorzugt zwischen 60°C und 90°C. Bei der Copolymerisation von gasförmigen Comonomeren wie Ethylen, 1,3-Butadien oder Vinylchlorid kann auch unter Druck, im Allgemeinen zwischen 5 bar und 100 bar, gearbeitet werden. Der pH-Wert während der Polymerisation liegt vorzugsweise zwischen 2 und 11. Werden Epoxy-Gruppen tragende Monomere a) eingesetzt, ist der pH-Wert bei der Polymerisation vorzugsweise zwischen 4 und 9, besonders bevorzugt zwischen 4 bis 8 und am meisten bevorzugt zwischen 6 und 7. Der pH-Wert kann in bekannter Weise durch organische wie anorganische Säuren, Basen oder Puffer eingestellt werden, wie beispielsweise durch Zugabe von Salzsäure, Ammoniak oder Erdalkali- bzw. Alkalihydroxiden, wie beispielsweise Natronlauge.

Die Polymerisation erfolgt üblicherweise in Wasser, gegebenenfalls im Gemisch mit einem oder mehreren organischen Lösungsmitteln, wie Alkohole mit 1 bis 7 C-Atomen. Beispiele für Alkohole sind Methanol, Ethanol, Propanol, Butanol oder Pentanol. Vorzugsweise beträgt der Anteil von Wasser, bezogen auf das Gesamtgewicht der organischen Lösungsmittel und Wasser ≥ 50 Gew.-%, besonders bevorzugt ≥ 90 Gew.-% und am meisten bevorzugt 100 Gew.-%.

Zur Initiierung der Polymerisation können beispielsweise die für die Emulsionspolymerisation gebräuchlichen monomerlöslichen Initiatoren, insbesondere wasserlöslichen Initiatoren oder auch Redox-Initiator-Kombinationen eingesetzt werden; vorzugsweise wird auf Redox-Initiator-Kombinationen verzichtet. Beispiele für wasserlösliche Initiatoren sind Wasserstoff - peroxid, t-Butylperoxid, t-Butylhydroperoxid, Kaliumperoxodiphosphat, tert.-Butyl peroxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid oder vorzugsweise (Erd)alkali oder Ammoniumsalze, wie Natrium-, Kalium- und Ammoniumsalze, der Peroxodischwefelsäure.

Die Wasserbeständigkeit der modifizierten wasserlöslichen Polymere bzw. ihrer Anwendungsprodukte kann insbesondere durch Einsatz von Peroxodischwefelsäure oder deren Salzen als Initiator weiter gesteigert werden.

Die genannten Initiatoren werden im Allgemeinen in einer Menge von 0,1 bis 5,0 Gew.-%, vorzugsweise 0,2 bis 2,0 Gew.-%, jeweils bezogen auf das Gesamtgewicht der Monomere, eingesetzt.

Vorzugsweise werden ≥ 20 Gew.-%, besonders bevorzugt ≥ 30 Gew.-%, mehr bevorzugt ≥ 40 Gew.-% und noch mehr bevorzugt ≥ 50 Gew.-% der Initiatoren vorgelegt und der verbleibende Teil der Initiatoren während der Polymerisation zudosiert, bezogen auf das Gesamtgewicht der Initiatoren. Während der Polymerisation werden vorzugsweise ≤ 80 Gew.-%, mehr bevorzugt ≤ 60 Gew.-% und noch mehr bevorzugt ≤ 10 Gew.-% der Initiatoren zudosiert, bezogen auf das Gesamtgewicht der Initiatoren. Am meisten bevorzugt werden während der Polymerisation keine Initiatoren zudosiert bzw. die Initiatoren werden vollständig vorgelegt. Nach vollständiger Zugabe der Monomere können zur Nachpolymerisation aber zusätzliche Mengen an Initiatoren zugesetzt werden. Auch durch die erfindungsgemäße Vorlage bzw. Dosierung der Initiatoren kann die Wasserbeständigkeit der modifizierten wasserlöslichen Polymere bzw. ihrer Anwendungsprodukte verbessert werden. Zudem kann die Teilchengröße oder die Viskosität der modifizierten wasserlöslichen Polymere auf diese Weise gesteuert werden.

Als Redox-Initiatoren können Kombinationen aus den genannten Initiatoren und Reduktionsmitteln verwendet werden. Geeignete Reduktionsmittel sind beispielsweise die Sulfite und Bisulfite der Alkalimetalle und von Ammonium, wie Natriumsulfit, die Derivate der Sulfoxylsäure wie Zink- oder Alkaliformaldehydsulfoxylate, wie Natriumhydroxymethansulfinat, und Ascorbinsäure. Die Reduktionsmittelmenge beträgt im Allgemeinen 0,001 bis 0,03 Gew.-%, vorzugsweise 0,001 bis 0,015 Gew.-%, jeweils bezogen auf das Gesamtgewicht der Monomere.

Die wasserlöslichen Polymere können ganz oder teilweise dosiert werden oder vorzugsweise vollständig vorgelegt werden. Vorzugsweise werden mindestens 50 Gew.-%, besonders bevorzugt werden mindestens 60 Gew.-% und am meisten bevorzugt mindestens 80 Gew.-% der wasserlöslichen Polymere vorgelegt, jeweils bezogen auf die insgesamt eingesetzte Menge an wasserlöslichen Polymeren.

Vorzugsweise sind ≥ 50 Gew.-%, besonders bevorzugt ≥ 60 Gew.-%, noch mehr bevorzugt ≥ 70 Gew.-% und am meisten bevorzugt ≥ 80 Gew.-% der insgesamt eingesetzten Menge an wasserlöslichen Polymeren zu einem Zeitpunkt vorgelegt oder zudosiert, zu dem ≤ 60 Gew.-%, vorzugsweise ≤ 50 Gew.-%, besonders bevorzugt ≤ 40 Gew.-% und am meisten bevorzugt ≤ 30 Gew.-% der insgesamt eingesetzten Mengen an Monomeren a) und b) vorgelegt oder zudosiert sind.

Die Monomere a) und b) können insgesamt vorgelegt oder insbesondere vollständig zudosiert werden. Die Monomere a) und b) werden vorzugsweise zu 0 bis 20 Gew.-%, insbesondere 0 bis 10 Gew.-%, bezogen auf das Gesamtgewicht der insgesamt eingesetzten Mengen an Monomeren a) und b), vorgelegt und die verbleibende Restmenge an den Monomeren a) und b) wird zu einem späteren Zeitpunkt während der Polymerisation zudosiert, insbesondere zu einem Zeitpunkt zu dem ≥ 50 Gew.-%, vorzugsweise ≥ 60 Gew.-%, besonders bevorzugt ≥ 70 Gew.-% und am meisten bevorzugt ≥ 80 Gew.-% der insgesamt eingesetzten Menge an wasserlöslichen Polymeren vorgelegt oder zudosiert sind. Die Dosierungen können separat (räumlich und zeitlich) durchgeführt werden.

Die bevorzugte Dosierung bzw. Vorlage der Monomere b) und insbesondere der Monomere a) oder der wasserlöslichen Polymere sind besonders zweckdienlich zur Verbesserung der Vernetzungseigenschaften der modifizierten wasserlöslichen Polymere oder zur Steigerung der Wasserbeständigkeit von deren Anwendungsprodukten.

Während der Polymerisation können zusätzlich Emulgatoren zugegen sein. Wird die Polymerisation in Gegenwart von Emulgatoren durchgeführt, beträgt deren Menge vorzugsweise 1 bis 5 Gew.-% bezogen auf das Gewicht der Monomere a) und b). Vorzugsweise wird in Abwesenheit von Emulgatoren polymerisiert. Beispiele für Emulgatoren sind anionische, kationische, amphotere, polymerisierbare oder nichtionische Emulgatoren, wie anionische Tenside, insbesondere Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Zur Steuerung des Molekulargewichts bzw. der Viskosität können während der Polymerisation regelnde Substanzen eingesetzt werden. Falls Regler eingesetzt werden, werden diese üblicherweise in Mengen zwischen 0,01 bis 5,0 Gew.-%, bezogen auf die zu polymerisierenden Monomeren a) und gegebenenfalls b), eingesetzt und separat oder auch vorgemischt mit Reaktionskomponenten dosiert. Beispiele solcher Substanzen sind n-Dodecylmercaptan, tert.-Dodecylmercaptan, Mercaptopropionsau re, Mercaptopropionsauremethylester, Isopropanol und Acetaldehyd.

Die modifizierten wasserlöslichen Polymere liegen vorzugsweise in Wasser oder in einer Mischung aus Wasser und organischem Lösungsmittel vor, insbesondere mit einem Feststoffgehalt von 5% bis 60%, bevorzugt 10% bis 50% und besonders bevorzugt 15% bis 45%. Die Viskositäten der modifizierten wasserlöslichen Polymere hängen sehr stark davon ab, welche wasserlöslichen Polymere zu ihrer Herstellung eingesetzt wurden, so dass modifizierte wasserlösliche Polymere mit unterschiedlichsten Viskositäten zugänglich sind.

Wässrige Dispersionen oder wässrige Lösungen der modifizierten wasserlöslichen Polymere zeichnen sich durch eine hohe Stabilität aus. Dies manifestiert sich beispielsweise dadurch, dass sich die modifizierten wasserlöslichen Polymere in wässriger Form bei einstündigem Zentrifugieren mittels einer Ultrazentrifuge (Optimal L-100k von Firma Beckman Coulter) unter Normalbedingungen nach DIN50014 bei 40.000 Umdrehungen pro Minute nicht in eine Polymerphase und ein Serum auftrennen lassen - im Gegensatz zu den bekannten Schutzkolloid stabilisierten Polymeren von ethylenisch ungesättigten Monomeren.

Zur Herstellung der modifizierten wasserlöslichen Polymere in Form von Feststoffen, insbesondere in Form von Pulvern, können modifizierte wasserlösliche Polymere in Form von Dispersionen oder Lösungen in bekannter Weise von Wasser und gegebenenfalls Lösungsmittel befreit werden, beispielsweise mittels Fällung, Destillation oder Trocknung, insbesondere durch Wirbelschichttrocknung, Gefriertrocknung oder Sprühtrocknung. Die Trocknung der modifizierten wasserlöslichen Polymere erfolgt vorzugsweise ohne Zusatz von Trocknungshilfsmitteln, das heißt vorzugsweise ohne dass die oben genannten wasserlöslichen Polymere nach Abschluss der Polymerisation zur Herstellung der modifizierten wasserlöslichen Polymere zugegeben werden, und insbesondere ohne dass die wasserlöslichen Polymere während der Trocknung zugegeben werden. Vorzugsweise werden die Dispersionen sprühgetrocknet. Die Sprühtrocknung erfolgt dabei in üblichen Sprühtrocknungsanlagen, wobei die Zerstaubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C gewählt.

Auf diese Weise können modifizierte wasserlösliche Polymere in Form von Wasser verdünnbaren oder in Wasser redispergierbaren Pulvern erhalten werden.

Zur Erhöhung der Lagerfähigkeit durch Verbesserung der Verblockungsstabilität kann das erhaltene Pulver mit Antiblockmittel (Antibackmittel) ausgerüstet werden. Vorzugsweise enthalten die modifizierten wasserlöslichen Polymere in Form von Pulvern 2 bis 10 Gew.-% Antiblockmittel, bezogen auf das Trockengewicht der modifizierten wasserlöslichen Polymere. Besonders bevorzugt wird jedoch auf die Zugabe von Antiblockmittel verzichtet. Beispiele für Antiblockmittel sind Ca- bzw. Mg-Carbonat, Talk, Gips, Kieselsäure, Kaoline, Metakaolin, kalziniertes Kaolin, Silicate mit Teilchengrößen vorzugsweise im Bereich von 10 nm bis 100 µm.

In einer bevorzugten Ausführungsform liegen ein oder mehrere modifizierte wasserlösliche Polymere als Bestandteil einer Vernetzungsmittel-Zusammensetzung vor, die zusätzlich ein oder mehrere Komponenten aus der Gruppe umfassend Basispolymere, Epoxid-Komponenten, Härter und Zusätze enthält.

Zur Herstellung der Vernetzungsmittel-Zusammensetzung können die modifizierten wasserlöslichen Polymere und die weiteren Komponente der Vernetzungsmittel-Zusammensetzung auf eine im vorliegenden technischen Gebiet gängige Weise gemischt werden.

Die Basispolymere basieren auf einem oder mehreren ethylenisch ungesättigten Monomeren beispielsweise ausgewählt aus der Gruppe umfassend die oben genannten Monomere a), b) und c), wobei dieselben Monomere bevorzugt, besonders bevorzugt und am meisten bevorzugt sind, wie oben angegeben. Solche Basispolymere sind auch als filmbildende Polymere bekannt.

Beispiele für als Basispolymere geeignete Homo- oder Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

Bevorzugt werden Vinylacetat-Homopolymerisate; Mischpolymerisate von Vinylacetat mit 1 bis 40 Gew.-% Ethylen; Mischpolymerisate von Vinylacetat mit 1 bis 40 Gew.-% Ethylen und 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 5 bis 13 C-Atomen wie VeoVa9R, Veo-Va10R, VeoVa11R; Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesondere n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 5 bis 13 C-Atomen, sowie 1 bis 30 Gew.-% Acrylsäureester von unverzweigten oder verzweigten Alkoholen mit 1 bis 15 C-Atomen, insbesondere n-Butylacrylat oder 2-Ethylhexylacrylat, welche noch 1 bis 40 Gew.-% Ethylen enthalten können; Mischpolymerisate mit Vinylacetat, 1 bis 40 Gew.-% Ethylen und 1 bis 60 Gew.-% Vinylchlorid; wobei die Polymerisate jeweils noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat und gegebenenfalls Ethylen; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Basispolymere kann mittels radikalisch initiierter Polymerisation der ethylenisch ungesättigten Monomere erfolgen wie beispielsweise in der DE-A 102006050336 beschrieben, vorzugsweise nach Emulsionspolymerisationsverfahren in wässrigem Medium.

Die Basispolymere können beispielsweise Emulgator stabilisiert oder bevorzugt Schutzkolloid stabilisiert sein. Als Schutzkolloide können beispielsweise die oben genannten wasserlöslichen Polymere oder die erfindungsgemäßen modifizierten wasserlöslichen Polymere dienen. Geeignete Emulgatoren sind weiter oben beispielhaft aufgeführt. Die Emulsionspolymerisationsverfahren zur Herstellung der Basispolymere erfolgen vorzugsweise in Gegenwart von Schutzkolloiden, besonders bevorzugt in Abwesenheit der modifizierten wasserlöslichen Polymere. In Schutzkolloid-stabilisierten Basispolymerisaten liegen die Schutzkolloide und die Basispolymere im Allgemeinen nebeneinander vor.

Die Basispolymere fallen bei der Polymerisation im Allgemeinen in Form von wässrigen Dispersionen an. Zur Herstellung der Basispolymere in Form von in Wasser redispergierbaren Pulvern werden die wässrigen Dispersionen, gegebenenfalls nach Zusatz von Trocknungshilfsmitteln, beispielsweise den oben genannten wasserlöslichen Polymeren, vorzugsweise den modifizierten wasserlöslichen Polymeren, getrocknet. Hierbei können die oben für die Trocknung der modifizierten wasserlöslichen Polymere beschriebenen Methoden zur Anwendung kommen. In der Regel wird die Trocknungshilfe in einer Gesamtmenge von 3 bis 30 Gew.-%, bezogen auf die polymeren Bestandteile der Dispersion, eingesetzt. Bevorzugt werden 5 bis 20 Gew.-% bezogen auf den Polymeranteil eingesetzt.

Bevorzugt ist auch die Verwendung von Polymer-Abmischungen als Vernetzungshilfsmittel. Polymer-Abmischungen enthalten ein oder mehrere modifizierte wasserlösliche Polymere und ein oder mehrere Basispolymere, insbesondere ein oder mehrere Schutzkolloid-stabilisierte Basispolymere. Bevorzugte Polymer-Abmischungen enthalten vorzugsweise 2 bis 95 Gew.-%, besonders bevorzugt 5 bis 50 Gew.-% und am meisten bevorzugt 5 bis 30 Gew.-% an modifizierten wasserlöslichen Polymeren, je bezogen auf das Trockengewicht der Polymer-Abmischung. Bevorzugte Polymer-Abmischungen enthalten auch vorzugsweise 5 bis 98 Gew.-%, besonders bevorzugt 50 bis 95 Gew.-% und am meisten bevorzugt 70 bis 95 Gew.-% an Schutzkolloid-stabilisierten Basispolymeren, je bezogen auf das Trockengewicht der Polymer-Abmischung. Die Polymer-Abmischungen liegen vorzugsweise in Form von wässrigen Dispersionen und besonders bevorzugt in Form von in Wasser redispergierbaren Pulvern vor.

Das Einbringen der modifizierten wasserlöslichen Polymere in die Polymer-Abmischungen kann auf unterschiedliche Weise erfolgen. Beispielsweise können Schutzkolloid-stabilisierte Basispolymere und modifizierte wasserlösliche Polymere jeweils in fester Form oder jeweils in wässriger Form gemischt werden. Des Weiteren ist es auch möglich, entweder die Schutzkolloid-stabilisierten Basispolymere oder die modifizierten wasserlöslichen Polymere in fester Form und die andere der beiden genannten Komponenten in wässriger Form zum Mischen einzusetzen. Bevorzugt werden die modifizierten wasserlöslichen Polymere, insbesondere in Form ihrer wässrigen Form, vor und/oder während des Trocknens der wässrigen Schutzkolloid-stabilisierten Basispolymer-Dispersionen zugegeben.

Epoxid-Komponenten sind beispielsweise Kunstharze, die Epoxidgruppen tragen, im Allgemeinen Polyether mit mindestens zwei Epoxidgruppen, insbesondere zwei endständigen Epoxidgruppen. Epoxid-Komponenten sind gängigerweise Polykondensate, insbesondere von mehrwertigen, monomeren Alkoholen und Chlor- sowie Epoxy-Gruppen tragenden Monomeren. Die Epoxidverbindungen können aliphatischer, araliphatischer oder aromatischer Natur sein. Die Epoxid-Komponenten tragen vorzugsweise keine radikalisch polymerisierbaren Gruppen, wie ethylenisch ungesättigte Gruppen. Beispiele sind Epoxidverbindungen vom Bisphenol-A-Typ, das heißt Kondensationsprodukte von Bisphenol-A und Epichlorhydrin oder Methylepichlorhydrin. Geeignet sind auch Epoxid-Komponenten auf Basis von Bisphenol-F, welche im Allgemeinen eine Mischung von Bisglycidyloxyphenylmethanen enthalten. Weitere Beispiele sind aliphatische Epoxidverbindungen wie Glycidylether von aliphatischen Polyolen, insbesondere der Butyldiglycidylether oder der Trimethylolpropantriglycidylether; cycloaliphatische Epoxidharze wie Vinylcyclohexandioxid, Dicyclopentadiendioxid und 3,4-Epoxy-6-methyl-cyclohexyl-methyl; und heterocyclische Epoxidverbindungen wie Triglycidyl-Isocyanurat. Derartige Epoxidharze sind im Handel erhältlich, beispielsweise die Bisphenol-A- und Bisphenol-F-Typen als Epilox^{R}-Harze. Bevorzugt werden die Epoxidharze vom Bisphenol-A-Typ und Bisphenol-F-Typ und besonders bevorzugt werden Glycidylether von aliphatischen Polyolen.

Die Epoxid-Komponenten werden in einer Menge von vorzugsweise 2 bis 70 Gew.-%, besonders bevorzugt 4 bis 50 Gew.-%, jeweils bezogen auf das Trockengewicht der modifizierten wasserlöslichen Polymere, eingesetzt.

Bevorzugt ist auch die Verwendung von Abmischungen mit Epoxid-Komponenten als Vernetzungshilfsmittel. Solche Abmischungen enthalten ein oder mehrere modifizierte wasserlösliche Polymere, ein oder mehrere Epoxid-Komponenten und gegebenenfalls ein oder mehrere Basispolymere, insbesondere ein oder mehrere Schutzkolloid-stabilisierte Basispolymere. Bevorzugte Abmischungen mit Epoxid-Komponenten enthalten vorzugsweise 5 bis 70 Gew.-%, besonders bevorzugt 5 bis 50 Gew.-% und am meisten bevorzugt 10 bis 50 Gew.-% an modifizierten wasserlöslichen Polymeren; vorzugsweise 5 bis 90 Gew.-%, besonders bevorzugt 5 bis 70 Gew.-% und am meisten bevorzugt 10 bis 70 Gew.-% an Epoxid-Komponenten; gegebenenfalls 0 bis 95 Gew.-% und vorzugsweise 5 bis 90 Gew.-% an Schutzkolloid-stabilisierten Basispolymeren, wobei sich die Angaben in Gew.-% je auf das Trockengewicht der Abmischungen mit Epoxid-Komponenten beziehen und sich insgesamt zu 100 Gew.-% aufaddieren. Die Abmischungen mit Epoxid-Komponenten liegen vorzugsweise in Form von wässrigen Dispersionen und besonders bevorzugt in Form von in Wasser redispergierbaren Pulvern vor.

Zur Herstellung der Abmischungen mit Epoxid-Komponenten können deren einzelnen Bestandteile auf unterschiedliche Weise gemischt werden. Beispielsweise können die Epoxid-Komponenten, die modifizierten wasserlöslichen Polymere und gegebenenfalls die Basispolymere jeweils in fester Form oder jeweils in wässriger Form zum Mischen eingesetzt werden. Des Weiteren ist es auch möglich, dass ein oder mehrere Komponenten einer Abmischung mit Epoxid-Komponenten in fester Form und verbleibende Komponenten in wässriger Form zum Mischen eingesetzt werden. Die Epoxid-Komponenten werden vorzugsweise als Reinsubstanz eingesetzt. Bevorzugt werden die modifizierten wasserlöslichen Polymere und/oder die Epoxid-Komponenten nach der Herstellung der Basispolymere mittels Polymerisation und besonders bevorzugt vor und/oder während des Trocknens der wässrigen Basispolymer-Dispersionen gemischt.

Härter beschleunigen die Vernetzung der modifizierten wasserlöslichen Polymere und/oder der optionalen Epoxid-Komponenten und ermöglichen die Vernetzung mit höheren Vernetzungsraten, selbst bei niedrigeren Temperaturen. Bevorzugte Härter werden ausgewählt aus der Gruppe umfassend Amine und Silane, insbesondere Aminosilane oder Epoxysilane.

Bevorzugte Amine sind solche mit zwei oder mehr Aminogruppen, beispielsweise aliphatische Polyamine, Polyoxyalkylenamine, Polyethylenimine, Aminosilane und deren Kondensationsprodukte, aminofunktionelle Polyvinylalkohole. Besonders bevorzugte Amine sind aliphatische Polyamine, welche unter den Handelsnamen Anquamine^{R} bzw. Epilink^{R} oder Epilox^{R}-Härter erhältlich sind, oder Polyoxyalkylenamine, welche unter den Handelsnamen Jeffamine^{R} erhältlich sind, oder Polyethylenimine, welche unter dem Handelsnamen Polyimin erhältlich sind.

Bevorzugt werden auch Aminosilane und deren Kondensationsprodukte. Geeignete Aminosilane sind beispielsweise die unter dem Handelsnamen Geniosil^{R} erhältlichen, wie N-(2-Aminoethyl)(3-Aminopropyl)-trimethoxysilan (Geniosil GF 91), (3-Aminopropyl)triethoxysilan (Geniosil GF 93), N-(2-Aminoethyl)(3-Aminopropyl)methyldimethoxysilan (Geniosil GF 95).

Bevorzugte Epoxysilane sind 3-Glycidoxypropyl)trimethoxysilan und insbesondere (3-Glycidoxypropyl)triethoxysilan.

Die Härter-Abmischungen liegen vorzugsweise in Form von wässrigen Dispersionen und besonders bevorzugt in Form von in Wasser redispergierbaren Pulvern vor.

Bevorzugt ist es, die Menge an Härter am molaren Verhältnis der Monomer-Einheiten a) der modifizierten wasserlöslichen Polymere und den funktionellen Gruppen des Härters, insbesondere den Amino- oder Epoxy-Gruppen des Härters, auszurichten. Besonders bevorzugt ist es dementsprechend auch, die modifizierten wasserlöslichen Polymere und die Härter in einem solchen Mengenverhältnis eingesetzt, dass das molare Verhältnis von Monomer-Einheiten a) zu den funktionellen Gruppen des Härters von 0,5 bis 2,0 beträgt.

Zur Herstellung der Härter-Abmischungen können deren einzelnen Bestandteile auf unterschiedliche Weise gemischt werden. Die Härter können beispielsweise als Reinsubstanz oder aufgebracht auf Träger, wie Calciumcarbonat, Silikate oder Zeolite, oder in verkapselter Form, beispielsweise in anorganischen oder organischen Verkapselungsmaterialien, eingebracht werden. Die Härter werden vorzugsweise als Reinsubstanz eingesetzt. Beispielsweise können die Härter, die modifizierten wasserlöslichen Polymere, gegebenenfalls die Epoxid-Komponenten und gegebenenfalls die Basispolymere jeweils in fester Form oder jeweils in wässriger Form gemischt werden. Des Weiteren ist es auch möglich, dass ein oder mehrere Komponenten einer Härter-Abmischung in fester Form und verbleibende Komponenten in wässriger Form zum Mischen eingesetzt werden. Bevorzugt werden die Härter und die weiteren Bestandteile der Härter-Abmischungen erst vor deren Applikation, vorzugsweise unmittelbar vor deren Applikation, vermischt werden. Besonders bevorzugt werden Härter zu wässrigen Dispersionen enthaltend modifizierte wasserlösliche Polymere und Epoxid-Komponenten und/oder Basispolymere, insbesondere Schutzkolloid-stabilisierte Basispolymere, zugegeben.

Zur Verbesserung der anwendungstechnischen Eigenschaften können die Vernetzungsmittel-Zusammensetzung, die Polymer-Abmischungen, die Abmischungen mit Epoxid-Komponenten oder die Härter-Abmischungen weitere Zusätze enthalten, wie beispielsweise Füllstoffe, Pigmente, Weichmacher, Schaumstabilisatoren, Flammenschutzmittel, Hydrophobierungsmittel, Öle oder weitere Polymere, wie Polyurethane oder Polysiloxane. Solche Zusätze können in den hierfür üblichen Mengen enthalten sein, wie beispielsweise zu 0,1 bis 90 Gew.-%, vorzugsweise 2 bis 50 Gew.-% und besonders bevorzugt 2 bis 10 Gew.-%, bezogen auf das Trockengewicht der jeweiligen Zusammensetzung oder Abmischung. Am meisten bevorzugt sind keine Zusätze enthalten.

Zur Applikation als Vernetzungshilfsmittel werden die modifizierten wasserlöslichen Polymere bzw. die Vernetzungsmittel-Zusammensetzung, die Polymer-Abmischungen, die Abmischungen mit Epoxid-Komponenten oder die Härter-Abmischungen im Allgemeinen in flüssiger oder pastöser Form, insbesondere als wässrige Mischung, auf ein Substrat aufgetragen. Die Vernetzung tritt im Allgemeinen im Zuge der Verfilmung der Polymere auf. Unter Vernetzung ist zu verstehen, dass insbesondere Monomer-Einheiten a) der modifizierten wasserlöslichen Polymere mit Polymeren und den gegebenenfalls zugesetzten sonstigen Bestandteilen der applizierten Zusammensetzung oder dem Substrat reagieren und dabei ein Netzwerk ausbilden.

Das Vernetzen der modifizierten wasserlöslichen Polymere kann vorteilhafterweise bei unterschiedlichsten Temperaturen erfolgen, beispielsweise bei 2°C bis 200°C, besonders bevorzugt 15°C bis 160°C. Falls das Vernetzen der modifizierten wasserlöslichen Polymere in Abwesenheit von Härter erfolgt, sind hierfür Temperaturen von 90°C bis 200°C bevorzugt und 130°C bis 160°C besonders bevorzugt. Die Vernetzung bei Temperaturen unter 30°C dauert im Allgemeinen mehrere Tage, beispielsweise eine Woche. Über 100°C, insbesondere über 125°C dauert die Vernetzung wenige Minuten beispielsweise 1 bis 10, insbesondere 2 bis 5 Minuten.

Die erfindungsgemäßen Vernetzungsmittel können in den dafür typischen Anwendungsbereichen eingesetzt werden und eignen sich allgemein als Vernetzungsmittel für Beschichtungsmittel oder Klebemittel, wie beispielsweise für gewebte oder nicht-gewebte Textilien, Fasern oder Papier. Besonders bevorzugt ist der Einsatz als Vernetzungsmittel für die Herstellung von Papierbeschichtungen, insbesondere für Thermo- und Inkjet-Papiere, oder zur Beschichtung von anorganischen und organischen Fasern.

Weitere Anwendungsmöglichkeiten für die modifizierten wasserlöslichen Polymere sind in bauchemischen Produkten, gegebenenfalls in Verbindung mit mineralischen Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel, Primer, Wasserdampfbarrieren und Farben.

Die erfindungsgemäßen modifizierten wasserlöslichen Polymere führen nach Vernetzung überraschenderweise zu Produkten mit Schmutz abweisenden Eigenschaften und mit der gewünschten Wasserbeständigkeit. Damit zusammenhängend ist die Extrahierbarkeit wasserlöslicher Bestandteile aus den vernetzten Produkten entsprechend reduziert, was dem Auftreten von Ausblühung entgegenwirkt. Vernetzte modifizierte wasserlösliche Polymere zeichnen sich durch eine sehr geringe Wasseraufnahme aus. Die modifizierten wasserlöslichen Polymere sind stippenfrei, scher- und lagerstabil, im unvernetzten Zustand in Wasser redispergierbar und nach Vernetzung wasserbeständig. Vorteilhafterweise kann bei Einsatz der erfindungsgemäßen modifizierten wasserlöslichen Polymere als Vernetzungshilfsmittel auf gesundheitsschädliche Härter, wie Formaldehyd freisetzende Härter, verzichtet werden.

Die nachfolgenden Beispiele dienen der weiteren Erläuterung der Erfindung:

### Herstellung der modifizierten wasserlöslichen Polymere

### Feststoffgehalt:

Bestimmung gemäß DIN EN ISO 3251 im Trockenschrank für 20 min bei 150°C

### Höpplerviskosität:

Bestimmung bei 20°C gemäß DIN 53015 in 4%iger wässriger Lösung.

### Brookfield-Viskosität:

Bestimmung mit einem Brookfieldviskosimeter, nach Temperierung auf 23°C, unter Verwendung von Spindel 1 bzw. 2 bei 20 Umdrehungen pro Minute. Die im Einzelfall eingesetzte Spindel, Lösungsmittel und Feststoffgehalt sind für die jeweilige Messung angegeben.

### Volumenmittlere Teilchengröße:

Bestimmung mittels Beckmann Coulter BeckmanCoulter LS 13320 (PIDS).

### Beispiel 1 (Bsp.1):

In einem thermostatisierten Laborreaktor mit 3,0 Liter Füllvolumen wurden unter Stickstoffatmosphäre 1002 g einer 20%-igen, wässrigen Polyvinylalkohollösung (Mowiol 4-88, Handelsname der Firma Kuraray, Höpplerviskosität 4 mPas, Verseifungsgrad 88) und 1196 g Wasser mit 1,1 g Kaliumperoxodisulfat (KPS) vorgelegt und unter Rühren auf 80°C aufgeheizt. Bei Erreichen von 80°C wurde eine Monomermischung aus 113 g Butylacrylat und 113 g Styrol innerhalb von 70 Minuten kontinuierlich in den Reaktor zudosiert. Nach dem Dosierende der Monomermischung wurden aus einem separatem Behälter 75,3 g Glycidylmethacrylat (GMA) innerhalb von 30 Minuten kontinuierlich in den Reaktor zugegeben. Nach der GMA-Dosierung wurde das so erhaltene Reaktionsgemisch innerhalb einer Stunde auf Raumtemperatur abgekühlt. Während der Abkühlungsphase wurden zur Nachpolymerisation zweimal je 4 g tert-Butylhydroper-oxid (10%ig in Wasser) und 4 g Ascorbinsäure (10%ig in Wasser) zugegeben.

Die so erhaltene Polymerdispersion hatte einen Feststoffgehalt von 20,2%, bei pH 7 eine Brookfield-Viskosität von 147 mPa.s (Spindel 1) und eine volumenmittlere Teilchengröße von 87 nm.

### Beispiel 2 (Bsp.2):

In einem thermostatisierten Laborreaktor mit 3,0 Liter Füllvolumen wurden unter Stickstoffatmosphäre 752 g einer 20%-igen, wässrigen Polyvinylalkohollösung (Mowiol 4-88)und 1396 g Wasser mit 0,8 g Kaliumperoxodisulfat (KPS) vorgelegt und unter Rühren auf 80°C aufgeheizt. Bei Erreichen von 80°C wurde eine Monomermischung aus 137,8 g Butylacrylat und 137,8 g Styrol innerhalb von 85 Minuten kontinuierlich in den Reaktor zudosiert. Nach Dosierende wurden aus einem separatem Behälter 75,3 g Glycidylmethacrylat (GMA) innerhalb von 30 Minuten kontinuierlich in den Reaktor zugegeben. Nach der GMA-Dosierung wurde das so erhaltene Reaktionsgemisch innerhalb einer Stunde auf Raumtemperatur abgekühlt. Während der Abkühlungsphase wurden zur Nachpolymerisation zweimal je 4g tert-Butylhydroper-oxid (10%ig in Wasser) und 4 g Ascorbinsäure (10%ig in Wasser) zugegeben.

Die so erhaltene Polymerdispersion hatte einen Feststoffgehalt von 20,1%, bei pH 7 eine Brookfield-Viskosität (Spindel 1) von 56 mPa.s und eine volumenmittlere Teilchengröße von 80 nm.

### Beispiel 3 (Bsp.3):

In einem thermostatisierten Laborreaktor mit 3,0 Liter Füllvolumen wurden unter Stickstoffatmosphäre 1002 g einer 20%-igen, wässrigen Polyvinylalkohollösung (Mowiol 4-88)und 1196 g Wasser mit 1,1 g Kaliumperoxodisulfat (KPS) vorgelegt und unter Rühren auf 80°C aufgeheizt. Bei Erreichen von 80°C wurde eine Monomermischung aus 144,5 g Butylacrylat, 144,5 g Styrol und 15 g Vinyltriethoxysilan innerhalb von 70 Minuten kontinuierlich in den Reaktor zudosiert. Nach der Dosierung wurde die Polymerisation eine Stunde fortgesetzt. Danach wurde das so erhaltene Reaktionsgemisch innerhalb einer Stunde auf Raumtemperatur abgekühlt. Während der Abkühlungsphase wurden zur Nachpolymerisation zweimal je 4 g tert-Butylhydroperoxid (10%ig in Wasser) und 4 g Ascorbinsäure (10%ig in Wasser) zugegeben.

Die so erhaltene Polymerdispersion hatte einen Feststoffgehalt von 20,1%, bei pH 5 eine Brookfield-Viskosität von 160 mPa.s (Spindel 1) und eine volumenmittlere Teilchengröße von 89 nm.

### Vergleichsbeispiel 4 (VBsp.4):

In einem thermostatisierten Laborreaktor mit 3,0 Liter Füllvolumen wurden unter Stickstoffatmosphäre 502,6 g einer 20%-igen, wässrigen Polyvinylalkohollösung (Mowiol 4-88)und 1595 g Wasser mit 0,8 g Kaliumperoxodisulfat (KPS) vorgelegt und unter Rühren auf 80°C aufgeheizt. Bei Erreichen von 80°C wurde eine Monomermischung aus 137,8 g Butylacrylat und 137,8 g Styrol innerhalb von 85 Minuten kontinuierlich in den Reaktor zudosiert. Nach dem Dosierende der Monomermischung wurden aus einem separatem Behälter 75,3 g Glycidylmethacrylat (GMA) innerhalb von 30 Minuten kontinuierlich in den Reaktor gegeben. Nach der GMA-Dosierung wurde das so erhaltene Reaktionsgemisch innerhalb einer Stunde auf Raumtemperatur abgekühlt. Während der Abkühlungsphase wurden zur Nachpolymerisation zweimal je 4 g tert-Butylhydroperoxid (10%ig in Wasser) und 4 g Ascorbinsäure (10%ig in Wasser) zugegeben.

Die so erhaltene Polymerdispersion hatte einen Feststoffgehalt von 20,3%, bei pH 7 eine Brookfield-Viskosität von 32 mPa.s (Spindel 1) und eine volumenmittlere Teilchengröße von 110 nm.

### Austestung des Redispergierverhaltens von Polymerfilmen basierend auf modifizierten wasserlöslichen Polymeren:

Die Dispersionen der (Vergleichs)Beispiele wurden je auf eine Glasplatte aufgetragen; nach Anwendung folgender Trocknungsbedingungen wurden Polymerfilme mit Schichtdicken von 0,2 mm erhalten:
- 24h RT:
   Trocknung für 24 Stunden unter Normalbedingungen nach DIN50014;
- 24h RT, 3 min 150°C:
   Trocknung für 24 Stunden unter Normalbedingungen nach DIN50014; anschließend zusätzlich für 3 Minuten im Trockenschrank bei 150°C.

Zur Überprüfung der Redispergierbarkeit der so erhaltenen Polymerfilme wurde mit einer Pipette jeweils ein Wassertropfen auf eine homogene Stelle des zu prüfenden Polymerfilms bei Normalbedingungen gemäß DIN50014 aufgebracht, und nach 60 Sekunden Einwirkzeit des Wassertropfens wurde mit der Fingerkuppe so lange an der gleichen Stelle verrieben, bis der Film an dieser Stelle entweder in Wasser redispergiert war oder, falls keine Redispergierung erfolgte, bis der Film in Filmstücke zerfiel.

Die Redispergierbarkeit der Polymerfilme wurde mit folgendem Bewertungsschema beurteilt:
Note 1: Film lässt sich durch leichtes Reiben sofort redispergieren oder redispergiert bereits selbständig;
Note 2: Film lässt sich durch Reiben redispergieren;
Note 3: Film lässt sich nur durch kräftiges Reiben teilweise redispergieren; es verbleiben nicht redispergierbare Filmstücke;
Note 4: Film lässt sich selbst durch längeres kräftiges Reiben nicht redispergieren, sondern zerfällt in Filmstücke.

**Tabelle 1: Redispergierbarkeit der Polymerfilme von modifizierten wasserlöslichen Polymeren:**

| Polymer | PVOH-Anteil^{a)} | Redispergierbarkeit der Polymerfilme | |
|---|---|---|---|
| | | 24h RT | 24h RT, 3 min 150°C |
| Bsp.1 | 40% | 1 | 4 |
| Bsp.2 | 30% | 2 | 4 |
| Bsp.3 | 40% | 1 | 3 |
| VBsp.4 | 20% | 4 | 4 |

| | | | |
|---|---|---|---|
| a) Anteil von Polyvinylalkohol in Gew.-%, bezogen auf das Trockengewicht des modifizierten wasserlöslichen Polymers. | | | |

Die Austestung zeigt, dass für einen Tag bei Raumtemperatur getrocknete Polymerfilme von erfindungsgemäßen Polymeren sich bei Raumtemperatur leicht in Wasser wieder aufnehmen lassen, im Gegensatz zum Polymerfilm des Vergleichsbeispiels 4. Wurden die Polymerfilme jedoch bei erhöhter Temperatur getrocknet, so waren auch die erfindungsgemäßen Polymerfilme trotz ihres hohen Anteils an wasserlöslichen Polymeren in keinem nennenswerten Umfang in Wasser aufnehmbar.

### Austestung des Redispergierverhaltens von Polymerfilmen basierend auf modifizierten wasserlöslichen Polymeren und Härter:

Je 50 g der jeweiligen Polymerdispersion der (Vergleichs)Beispiele wurden mit den in Tabelle 2 angegebenen Mengen am jeweiligen Härter unter Normalbedingungen nach DIN50014 gemischt. Anschließend wurden die so erhaltenen Mischungen je auf eine Glasplatte aufgetragen; nach Anwendung folgender Trocknungsbedingungen wurden Polymerfilme mit Schichtdicken von 0,2 mm erhalten:
- 1w RT:
   Trocknung für 1 Woche unter Normalbedingungen nach DIN 50014;
- 1w RT, 3 min 150°C:
   Trocknung für 1 Woche unter Normalbedingungen nach DIN 50014; anschließend zusätzlich für 3 Minuten im Trockenschrank bei 150°C.

Die Redispergierbarkeit der so erhaltenen Polymerfilme wurde nach dem oben definierten Schema mit den Noten 1 bis 4 bewertet. Die Austestungsergebnisse sind in Tabelle 2 zusammengefasst.

**Tabelle 2: Redispergierbarkeit der Polymerfilme von modifizierten wasserlöslichen Polymeren und Härtern:**

| Polymer | Härter | Redispergierbarkeit des Polymerfilms | |
|---|---|---|---|
| | | 1w RT | 1w RT, 3 min 150°C |
| Bsp.1 | 1,2 g Jeffamine T-403^{a)} | 4 | 4 |
| Bsp.3 | 0,3 g Silan GF 82^{b}) | 1 - 2 | 3 - 4 |

| | | | |
|---|---|---|---|
| a) Polyetheramin der Firma Huntsman; b) (3-Glycidoxypropyl)triethoxysilan) der Firma Wacker Chemie. | | | |

Härter führen allgemein zu einer stärkeren bzw. schnelleren Vernetzung der modifizierten wasserlöslichen Polymere. Die Austestungsergebnisse mit dem Polymer des Beispiels 1 und Jeffamine T-403 zeigen, dass durch zusätzlichen Einsatz eines Härters auch schon nach Trocknung bei Raumtemperatur wasserfeste Polymerfilme erhalten werden können.

### Herstellung einer Polymerdispersion (Basispolymer):

In ein Polymerisationsgefäß mit 12 Liter Volumen wurden 2230 g Wasser, 2380 g einer 20 %-igen, wässrigen Lösung eines Polyvinylalkohols mit einem Hydrolysegrad von 88 Mol-% und einer Höpplerviskosität von 4 mPas, 10 g Eisenammonium-sulfat (1 %-ig in Wasser) sowie 1050 g Butylacrylat und 617 g Styrol vorgelegt und auf 70°C erwärmt. Anschließend wurden tert.-Butylhydroperoxid (0,1 %-ig in Wasser) und Brüggolit (Natriumhydroxymethansulfinat; 0,15 %-ig in Wasser) kontinuierlich mit einer Dosiergeschwindigkeit von je 10 g/h zudosiert. Ab Polymerisationsbeginn, erkennbar an dem Anstieg der Innentemperatur, wurde das restliche Monomergemisch bestehend aus 1950 g Butylacrylat und 1150 g Styrol kontinuierlich in 3,5 h mit einer Dosiergeschwindigkeit von 885 g/h zudosiert. Drei Stunden nach Polymerisationsbeginn wurde die Dosiergeschwindigkeit des Initiators innerhalb von 1 h kontinuierlich bis auf 60 g/h erhöht. Es wurde polymerisiert bis keine Polymerisationswärme mehr frei wurde. Zur Entfernung von Restmonomeren wurde nach Abkühlen auf 30°C mit 10 g tert.-Butylhydroperoxid (10 %-ig in Wasser) und 20 g Brüggolit (10 %-ig in Wasser) nachpolymerisiert.

Es wurde eine Dispersion mit einem Feststoffgehalt von 53,7%, einer Brookfield-Viskosität (Spindel 2) von 680 mPas, einem pH-Wert von 4,3 und einem Teilchengrößendurchmesser Dw von 800 nm erhalten. Nach Sieben mit einem Sieb einer Maschenweite von 250 µm wurden 2 g Siebrückstand erhalten. Das freie Restmonomer betrug < 100 ppm.

### Herstellung von Polymerpulvern:

### Vergleichspulver 1 (VPulver 1):

90 Gew.-% der Dispersion des Basispolymers wurde mit 10 Gew.-% (fest/fest) Polyvinylalkohol Mowiol 4/88 mit einem Hydrolysegrad von 88 Mol% und einer Viskositat nach Höppler von 4 mPas versetzt und mit Wasser auf eine Höppler-Viskosität von 250 mPas verdünnt. Die Dispersion wurde dann mittels Zweistoffdüse versprüht. Als Verdüsungskomponente diente auf 4 bar vorgepresste Luft, die gebildeten Tropfen wurden mit auf 125°C erhitzter Luft im Gleichstrom getrocknet. Das erhaltene trockene Pulver wurde mit 10 Gew.-% handelsüblichem Antiblockmittel (Gemisch aus Calcium-Magnesium-Carbonat und Magnesiumhydrosilikat) versetzt.

### Vergleichspulver 2 (VPulver 2):

Identisch wie VPulver 1, mit dem Unterschied, dass 80 Gew.-% Dispersion des Basispolymers (fest/fest) eingesetzt und der Dispersion zusätzlich 10 Gew.-% Epilox P 13-31 (Triglycidether auf Basis von Trimethylolpropan der Firma Leuna-Harze) zugesetzt wurden.

### Pulver 3:

Identisch wie VPulver 1, mit dem Unterschied, dass an Stelle des Polyvinylalkohols Mowiol 4/88 die entsprechende Menge (fest/fest) am modifizierten wasserlöslichen Polymer des Beispiels 1 eingesetzt wurden.

### Pulver 4:

Identisch wie Pulver 3, mit dem Unterschied, dass 80 Gew.-% Dispersion des Basispolymers (fest/fest) und der Dispersion zusätzlich 10 Gew.-% Epilox P 13-31 (Triglycidether auf Basis von Trimethylolpropan der Firma Leuna-Harze) zugesetzt wurden.

### Ausprüfung der Festigkeit von Filmen von Polymerpulvern:

### Bestimmung der Reißfestigkeit:

Je 50 g der (Vergleichs)Pulver wurden durch Zugabe von Wasser in Redispersionen mit einem Feststoffgehalt von 50% überführt. Die jeweilige Redispersion wurde gegebenenfalls mit dem Härter Jeffamine T-403 versetzt, in der Menge, wie in Tabelle 3 angegeben. Ein Teil der jeweiligen Redispersion wurde auf eine Glasplatte aufgetragen und für eine Woche unter Normalbedingungen nach DIN50014 getrocknet, wodurch ein Polymerfilm mit einer Schichtdicke von 0,2 mm erhalten wurde.

Der jeweilige Polymerfilm wurde anschließend drei Tage bei 21°C in Wasser gelagert und anschließend in einem Zugversuch nach DIN 5304 ausgeprüft. Die Ergebnisse der Austestung sind in Tabelle 3 aufgeführt.

### Bestimmung der Verschmutzungsresistenztest:

Es wurden Polymerfilme hergestellt, wie unter Überschrift "Bestimmung der Reißfestigkeit" beschrieben. Auf den jeweiligen getrockneten Polymerfilm wurde Kaffee bzw. Johannisbeersaft aufgetropft und anschließend über Nacht unter Normalbedingungen (DIN 50014 23/50) gelagert. Danach wurden die Polymerfilme mit 23°C warmem Wasser gewaschen und folgendermaßen visuell beurteilt:
+++ Fleck nicht sichtbar;
++ Fleck kaum erkennbar;
- Fleck sichtbar.

Die Ergebnisse sind in Tabelle 3 zusammengefasst.

### Stabilität gefüllter Formkörper:

50 g des jeweiligen (Vergleichs)Pulvers wurden mit Sand (BCS 413, mittlere Korngröße 130 Mikrometer) in einem Gewichtsverhältnis von 1:2 vermischt und mit der in Tabelle 3 angegebenen Menge an Härter abgemischt. Anschließend wurde Wasser zugegeben und gemischt, wobei die (Vergleichs)Pulver redispergiert wurden. Die so erhaltenen Formmassen wurden in eine Form (Länge/Breite/Höhe = 10 cm/1 cm/4 mm) gegeben und getrocknet. Die so erhaltenen Formkörper wurden bei Raumtemperatur in Wasser gelagert und nach 7 Tagen die Stabilität folgendermaßen beurteilt:
stabil: der Formkörper verblieb nach Wasserlagerung dimensionsstabil;
zerfallen: Formkörper nach Wasserlagerung in Bruchstücke zerfallen.
Die Ergebnisse der Austestung sind in folgender Tabelle in der Spalte "Stabilität" aufgelistet.

Mit Vergleichspulver 1 ohne Härterzugabe wurden die schlechtesten Ergebnisse erzielt (Tabelle 3). War das entsprechende Pulver mit einer Epoxy-Verbindung und einem Aminhärter modifiziert, so waren die Reißfestigkeit des Polymerfilms und die Stabilität der Formmasse verbessert, es wurde aber weiterhin keine Verschmutzungsresistenztest erreicht (Tabelle 3: VPulver 2). Die erfindungsgemäßen Pulver 3 und 4 führten zu Formmassen mit der gewünschten Reißfestigkeit und Stabilität sowie darüber hinaus zu Verschmutzungs-resistenten Formkörpern.

**Tabelle 3: Austestung von Polymerfilmen basierend auf modifizierten wasserlöslichen Polymeren, Basispolymeren und gegebenenfalls Härter:**

| Pulver | Härter* [g] | Reißfestigkeit [Mpa] | Stabilität | Verschmutzungsresistenz | |
|---|---|---|---|---|---|
| | | | | Kaffee | Johannisbeersaft |
| VPulver 1 | - | 7,1 | zerfallen | - | - |
| VPulver 2 | 3,0 | 9,2 | stabil | - | - |
| Pulver 3 | 0,8 | 8,2 | stabil | ++ | ++ |
| Pulver 4 | 3,0 | 10,5 | stabil | +++ | +++ |

| | | | | | |
|---|---|---|---|---|---|
| *: Jeffamine T-403: Polyetheramin der Firma Huntsman. | | | | | |

## Patentansprüche

1. Verwendung von modifizierten wasserlöslichen Polymeren als Vernetzungsmittel, **dadurch gekennzeichnet, dass** die modifizierten wasserlöslichen Polymere erhältlich sind durch radikalisch initiierte Polymerisation von
a) einem oder mehreren ethylenisch ungesättigten Monomeren, die ein oder mehrere Epoxid-, Amin-, Carbonsäure-, Carbonsäureanhydrid- und/oder Silan-Gruppen tragen, und
b) einem oder mehreren, von den Monomeren a) verschiedenen ethylenisch ungesättigten Monomeren in Gegenwart von 25 bis 80 Gew.-% an einem oder mehreren wasserlöslichen Polymeren, bezogen auf das Gesamtgewicht der modifizierten wasserlöslichen Polymere.

2. Verwendung von modifizierten wasserlöslichen Polymeren als Vernetzungsmittel nach Anspruch 1, **dadurch gekennzeichnet, dass** ein oder mehrere Monomere a) ausgewählt werden aus der Gruppe umfassend Glycidylacrylat, Glycidylmethacrylat, Allylglycidylether; 2-Dimethylaminoethylmethacrylat, 2-tert. Butylaminoethylmethacrylat, Allyl-N-(2-aminoethyl)-carbamat-hydrochlorid, Allyl-N-(6-aminohexyl)-carbamat-hydrochlorid, Allyl-N-(3-aminopropyl)-hydrochlorid, Allylamin oder Vinylpyridin; Acrylsäure, Methacrylsäure, Fumarsäure und Maleinsäure; Monoester der Fumarsäure; Monoester der Maleinsäure und Maleinsäureanhydrid.

3. Verwendung von modifizierten wasserlöslichen Polymeren als Vernetzungsmittel nach Anspruch 1, **dadurch gekennzeichnet, dass** ein oder mehrere Monomere a) ausgewählt werden aus der Gruppe umfassend ethylenisch ungesättigte Siliciumverbindungen der allgemeinen Formel R¹SiR²₀₋₂ (OR³)₁₋₃, wobei R¹ die Bedeutung CH₂=CR⁴-(CH₂)₀₋₁ oder CH₂=CR⁴CO₂(CH₂)₁₋₃ hat, R² die Bedeutung C₁- bis C₃-Alkylrest, C₁- bis C₃-Alkoxyrest oder Halogen, R³ ein unverzweigter oder verzweigter, gegebenenfalls substituierter Alkylrest mit 1 bis 12 C-Atomen, ist oder ein Acylrest mit 2 bis 12 C-Atomen ist, wobei R³ gegebenenfalls durch eine Ethergruppe unterbrochen sein kann, und R⁴ für H oder CH₃ steht; und
Silan-Gruppen enthaltende (Meth)acrylamide der allgemeinen Formel CH₂=CR⁵-CO-NR⁶-R⁷-SiR⁸n-(R⁹)₃₋ₘ, wobei n= 0 bis 4, m= 0 bis 2, R⁵ entweder H oder eine Methyl-Gruppe ist, R⁶ H ist oder eine Alkyl-Gruppe mit 1 bis 5 C-Atomen ist; R⁷ eine Alkylen-Gruppe mit 1 bis 5 C-Atomen oder eine bivalente organische Gruppe in welcher die Kohlenstoffkette durch ein O- oder N-Atom unterbrochen wird, ist, R⁸ eine Alkyl-Gruppe mit 1 bis 5 C-Atomen ist, R⁹ eine Alkoxy-Gruppe mit 1 bis 40 C-Atomen ist, welche mit weiteren Heterocyclen substituiert sein können.

4. Verwendung von modifizierten wasserlöslichen Polymeren als Vernetzungsmittel nach Anspruch 1 bis 3, **dadurch gekennzeichnet, dass** die Monomere a) in einer Menge von 0,5 bis 60 Gew.-%, bezogen auf das Gesamtgewicht der modifizierten wasserlöslichen Polymere, eingesetzt werden.

5. Verwendung von modifizierten wasserlöslichen Polymeren als Vernetzungsmittel nach Anspruch 1 bis 4, **dadurch gekennzeichnet, dass** ein oder mehrere Monomere b) ausgewählt werden aus der Gruppe umfassend Vinylester, (Meth)acrylsäureester, Vinylaromaten, Olefine, 1,3-Diene und Vinylhalogenide.

6. Verwendung von modifizierten wasserlöslichen Polymeren als Vernetzungsmittel nach Anspruch 1 bis 5, **dadurch gekennzeichnet, dass** die Monomere b) in einer Menge von 5 bis 73 Gew.-%, bezogen auf das Gesamtgewicht der modifizierten wasserlöslichen Polymere, eingesetzt werden.

7. Verwendung von modifizierten wasserlöslichen Polymeren als Vernetzungsmittel nach Anspruch 1 bis 6, **dadurch gekennzeichnet, dass** ein oder mehrere wasserlösliche Polymere ausgewählt werden aus der Gruppe umfassend Proteine, Ligninsulfonate, Formaldehydsulfonate, Polysaccharide in wasserlöslicher Form sowie Polymere, die ein oder mehrere Einheiten aus der Gruppe umfassend Vinylalkohol-, Vinylpyrrolidon-, Vinylacetal-, Vinylsulfonsäure-, Acrylamid-Einheiten und/oder Einheiten von ethylenisch ungesättigten Carbonsäuren und/oder ethylenisch ungesättigten Aminen oder Ammoniumverbindungen enthalten.

8. Verwendung von modifizierten wasserlöslichen Polymeren als Vernetzungsmittel nach Anspruch 1 bis 7, **dadurch gekennzeichnet, dass** ein oder mehrere wasserlösliche Polymere ausgewählt werden aus der Gruppe umfassend Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate, Dextrine und Cyclodextrine; Proteine wie Kasein oder Kaseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)-acrylamid, Polyvinylsulfonsäuren und deren wasserlöslichen Copolymere; Melaminformaldehydsulfonate, Naphthalinformaldehydsulfonate, Cresolformaldehydsulfonate, Styrolmaleinsäure- und Vinylethermaleinsäure-Copolymere.

9. Verwendung von modifizierten wasserlöslichen Polymeren als Vernetzungsmittel nach Anspruch 1 bis 8, **dadurch gekennzeichnet, dass** die Polymerisation mit einem oder mehreren Initiatoren initiiert wird und die Initiatoren zu ≥ 20 Gew.-%, bezogen auf das Gesamtgewicht der insgesamt bei der Polymerisation eingesetzten Initiatoren, vor Initiierung der Polymerisation vorgelegt und der verbleibende Teil der Initiatoren während der Polymerisation zudosiert werden.

10. Verwendung von modifizierten wasserlöslichen Polymeren als Vernetzungsmittel nach Anspruch 1 bis 9, **dadurch gekennzeichnet, dass** mindestens 50 Gew.-% der wasserlöslichen Polymere vor Initiierung der Polymerisation vorgelegt werden, bezogen auf die insgesamt eingesetzte Menge an wasserlöslichen Polymeren.

11. Verwendung von modifizierten wasserlöslichen Polymeren als Vernetzungsmittel nach Anspruch 1 bis 10, **dadurch gekennzeichnet, dass** die Monomere a) und b) zu 0 bis 20 Gew.-%, bezogen auf das Gesamtgewicht der insgesamt eingesetzten Mengen an Monomeren a) und b), vor Initiierung der Polymerisation vorgelegt und die verbleibende Restmenge an den Monomeren a) und b) während der Polymerisation zudosiert werden.

12. Verwendung von modifizierten wasserlöslichen Polymeren als Vernetzungsmittel nach Anspruch 1 bis 11, **dadurch gekennzeichnet, dass** ein oder mehrere modifizierte wasserlösliche Polymere als Bestandteil einer Vernetzungsmittel-Zusammensetzung vorliegen, die zusätzlich ein oder mehrere Komponenten aus der Gruppe umfassend Basispolymere, Epoxid-Komponenten, Härter und Zusätze enthält.

13. Verwendung von modifizierten wasserlöslichen Polymeren als Vernetzungsmittel nach Anspruch 1 bis 12, **dadurch gekennzeichnet, dass** die Vernetzungsmittel in bauchemischen Produkten, in Beschichtungsmitteln oder Klebemitteln, insbesondere für gewebte oder nicht-gewebte Textilien, Papier oder Fasern eingesetzt werden.

## Claims

1. Use of modified water-soluble polymers as crosslinking agents, **characterized in that** said modified water-soluble polymers are obtainable by free-radically initiated polymerization of
a) one or more ethylenically unsaturated monomers bearing one or more epoxy, amine, carboxylic acid, carboxylic anhydride and/or silane groups, and
b) one or more ethylenically unsaturated monomers other than said monomers a) in the presence of 25 to 80 wt% of one or more water-soluble polymers, based on the overall weight of modified water-soluble polymers.

2. Use of modified water-soluble polymers as crosslinking agents according to Claim 1, **characterized in that** one or more monomers a) are selected from the group comprising glycidyl acrylate, glycidyl methacrylate, allyl glycidyl ether; 2-dimethylaminoethyl methacrylate, 2-tert-butylaminoethyl methacrylate, allyl N-(2-aminoethyl)carbamate hydrochloride, allyl N-(6-aminohexyl)carbamate hydrochloride, allyl N-(3-aminopropyl) hydrochloride, allylamine or vinylpyridine; acrylic acid, methacrylic acid, fumaric acid and maleic acid; monoesters of fumaric acid; monoesters of maleic acid and maleic anhydride.

3. Use of modified water-soluble polymers as crosslinking agents according to Claim 1, **characterized in that** one or more monomers a) are selected from the group comprising ethylenically unsaturated silicon compounds of general formula R¹SiR²₀₋₂(OR³)₁₋₃, where R¹ is CH₂=CR⁴-(CH₂)₀₋₁ or CH₂=CR⁴CO₂(CH₂)₁₋₃, R² is C₁-C₃ alkyl, C₁-C₃ alkoxy or halogen, R³ is branched or unbranched, optionally substituted alkyl of 1 to 12 carbon atoms or acyl of 2 to 12 carbon atoms, wherein R³ may optionally be interrupted by an ether group, and R⁴ is H or CH₃; and
silane group-containing (meth)acrylamides of general formula CH₂=CR⁵-CO-NR⁶-R⁷-SiR⁸n-(R⁹)₃₋ₘ, where n = 0 to 4, m= 0 to 2, R⁵ is either H or methyl, R⁶ is H or alkyl of 1 to 5 carbon atoms; R⁷ is alkylene of 1 to 5 carbon atoms or a bivalent organic group in which the carbon chain is interrupted by an oxygen or nitrogen atom, R⁸ is alkyl of 1 to 5 carbon atoms, R⁹ is alkoxy of 1 to 40 carbon atoms, which may each be substituted with further heterocycles.

4. Use of modified water-soluble polymers as crosslinking agents according to Claim 1 or 2 or 3, **characterized in that** said monomers a) are employed in an amount of 0.5 to 60 wt%, based on the overall weight of the modified water-soluble polymers.

5. Use of modified water-soluble polymers as crosslinking agents according to Claim 1 or 2 or 3 or 4, **characterized in that** one or more monomers b) are selected from the group comprising vinyl esters, (meth)acrylic esters, vinylaromatics, olefins, 1,3-dienes and vinyl halides.

6. Use of modified water-soluble polymers as crosslinking agents according to Claim 1 or 2 or 3 or 4 or 5, **characterized in that** said monomers b) are employed in an amount of 5 to 73 wt%, based on the overall weight of the modified water-soluble polymers.

7. Use of modified water-soluble polymers as crosslinking agents according to Claim 1 or 2 or 3 or 4 or 5 or 6, **characterized in that** one or more water-soluble polymers are selected from the group comprising proteins, ligninsulfonates, formaldehydesulfonates, polysaccharides in water-soluble form and also polymers containing one or more units from the group comprising vinyl alcohol units, vinylpyrrolidone units, vinyl acetal units, vinylsulfonic acid units, acrylamide units and/or units of ethylenically unsaturated carboxylic acids and/or ethylenically unsaturated amines or ammonium compounds.

8. Use of modified water-soluble polymers as crosslinking agents according to Claim 1 or 2 or 3 or 4 or 5 or 6 or 7, **characterized in that** one or more water-soluble polymers are selected from the group comprising polyvinyl alcohols; polyvinyl acetals; polyvinylpyrrolidones; polysaccharides in water-soluble form such as starches (amylose and amylopectin), celluloses and their carboxymethyl, methyl, hydroxyethyl and/or hydroxypropyl derivatives, dextrins and cyclodextrins; proteins such as casein or caseinate, soyprotein, gelatin; ligninsulfonates; synthetic polymers such as poly(meth)acrylic acid, copolymers of (meth)acrylates with carboxyl-functional comonomer units, poly(meth)acrylamide, polyvinylsulfonic acids and their water-soluble copolymers; melamineformaldehydesulfonates, naphthaleneformaldehydesulfonates, cresolformaldehydesulfonates, styrene-maleic acid copolymers and vinyl ether-maleic acid copolymers.

9. Use of modified water-soluble polymers as crosslinking agents according to Claim 1 or 2 or 3 or 4 or 5 or 6 or 7 or 8, **characterized in that** the polymerization is initiated with one or more initiators and ≥ 20 wt% of initiators, based on the overall weight of all the initiators used in the polymerization, is initially charged before initiation of the polymerization and the remaining portion of the initiators is metered in during the polymerization.

10. Use of modified water-soluble polymers as crosslinking agents according to Claim 1 or 2 or 3 or 4 or 5 or 6 or 7 or 8 or 9, **characterized in that** at least 50 wt% of the water-soluble polymers is initially charged before initiation of the polymerization, based on the total amount employed of water-soluble polymers.

11. Use of modified water-soluble polymers as crosslinking agents according to Claim 1 or 2 or 3 or 4 or 5 or 6 or 7 or 8 or 9 or 10, **characterized in that** from 0 to 20 wt% of said monomers a) and b), based on the overall amount of the altogether employed amounts of monomers a) and b), is initially charged before initiation of the polymerization and the remainder of monomers a) and b) is metered in during the polymerization.

12. Use of modified water-soluble polymers as crosslinking agents according to Claim 1 or 2 or 3 or 4 or 5 or 6 or 7 or 8 or 9 or 10 or 11, **characterized in that** one or more modified water-soluble polymers are present as a constituent of a crosslinking agent composition additionally containing one or more components from the group comprising base polymers, epoxy components, hardeners and additives.

13. Use of modified water-soluble polymers as crosslinking agents according to Claim 1 or 2 or 3 or 4 or 5 or 6 or 7 or 8 or 9 or 10 or 11 or 12, **characterized in that** the crosslinking agents are employed in chemical products used in civil engineering, in coatings or adhesives, in particular for woven or nonwoven textiles, paper or fibers.

## Revendications

1. Utilisation de polymères solubles dans l'eau modifiés en tant qu'agents de réticulation, **caractérisée en ce que** les polymères solubles dans l'eau modifiés peuvent être obtenus par polymérisation initiée par voie radicalaire de
a) un ou plusieurs monomères éthyléniquement insaturés, qui portent un ou plusieurs groupes époxyde, amine, acide carboxylique, anhydride d'acide carboxylique et/ou silane, et
b) un ou plusieurs monomères éthyléniquement insaturés différents des monomères a),
en présence de 25 à 80 % en poids d'un ou de plusieurs polymères solubles dans l'eau, par rapport au poids total des polymères solubles dans l'eau modifiés.

2. Utilisation de polymères solubles dans l'eau modifiés en tant qu'agents de réticulation selon la revendication 1, **caractérisée en ce qu'**un ou plusieurs monomères a) sont choisis dans le groupe comprenant l'acrylate de glycidyle, le méthacrylate de glycidyle, l'éther d'allylglycidyle ; le méthacrylate de 2-diméthylaminoéthyle, le méthacrylate de 2-tert.-butylaminoéthyle, le chlorhydrate de carbamate d'allyl-N-(2-amino-éthyle), le chlorhydrate de carbamate d'allyl-N-(6-aminohexyle), le chlorhydrate d'allyl-N-(3-aminopropyle), l'allylamine ou la vinylpyridine ; l'acide acrylique, l'acide méthacrylique, l'acide fumarique et l'acide maléique ; les monoesters de l'acide fumarique ; les monoesters de l'acide maléique et l'anhydride de l'acide maléique.

3. Utilisation de polymères solubles dans l'eau modifiés en tant qu'agents de réticulation selon la revendication 1, **caractérisée en ce qu'**un ou plusieurs monomères a) sont choisis dans le groupe comprenant les composés de silicium éthyléniquement insaturés de formule générale R¹SiR²₀₋₂(OR³)₁₋₃, R¹ ayant la signification CH₂=CR⁴-(CH₂)₀₋₁ ou CH₂=CR⁴CO₂(CH₂)₁₋₃, R² ayant la signification radical alkyle en C₁ à C₃, radical alcoxy en C₁ à C₃ ou halogène, R³ étant un radical alkyle non ramifié ou ramifié, éventuellement substitué, de 1 à 12 atomes C, ou un radical acyle de 2 à 12 atomes C, R³ pouvant éventuellement être interrompu par un groupe éther, et R⁴ représentant H ou CH₃; et
les (méth)acrylamides contenant des groupes silane de formule générale CH₂=CR⁵-CO-NR⁶-R⁷-SiR⁸n-(R⁹)₃₋ₘ, avec n = 0 à 4, m = 0 à 2, R⁵ représentant H ou un groupe méthyle, R⁶ représentant H ou un groupe alkyle de 1 à 5 atomes C, R⁷ représentant un groupe alkylène de 1 à 5 atomes C ou un groupe organique bivalent dans lequel la chaîne carbonée est interrompue par un atome O ou N, R⁸ représentant un groupe alkyle de 1 à 5 atomes C, R⁹ représentant un groupe alcoxy de 1 à 40 atomes C, qui peut être substitué avec des hétérocycles supplémentaire.

4. Utilisation de polymères solubles dans l'eau modifiés en tant qu'agents de réticulation selon les revendications 1 à 3, **caractérisée en ce que** les monomères a) sont utilisés en une quantité de 0,5 à 60 % en poids, par rapport au poids total des polymères solubles dans l'eau modifiés.

5. Utilisation de polymères solubles dans l'eau modifiés en tant qu'agents de réticulation selon les revendications 1 à 4, **caractérisée en ce qu'**un ou plusieurs monomères b) sont choisis dans le groupe comprenant les esters de vinyle, les esters de l'acide (méth)acrylique, les composés aromatiques de vinyle, les oléfines, les 1,3-diènes et les halogénures de vinyle.

6. Utilisation de polymères solubles dans l'eau modifiés en tant qu'agents de réticulation selon les revendications 1 à 5, **caractérisée en ce que** les monomères b) sont utilisés en une quantité de 5 à 73 % en poids, par rapport au poids total des polymères solubles dans l'eau modifiés.

7. Utilisation de polymères solubles dans l'eau modifiés en tant qu'agents de réticulation selon les revendications 1 à 6, **caractérisée en ce qu'**un ou plusieurs polymères solubles dans l'eau sont choisis dans le groupe comprenant les protéines, les sulfonates de lignine, les sulfonates de formaldéhyde, les polysaccharides sous forme soluble dans l'eau et les polymères qui contiennent une ou plusieurs unités du groupe comprenant les unités alcool vinylique, vinylpyrrolidone, vinylacétal, acide vinylsulfonique, acrylamide et/ou les unités d'acides carboxyliques éthyléniquement insaturés et/ou d'amines éthyléniquement insaturées ou de composés d'ammonium.

8. Utilisation de polymères solubles dans l'eau modifiés en tant qu'agents de réticulation selon les revendications 1 à 7, **caractérisée en ce qu'**un ou plusieurs polymères solubles dans l'eau sont choisis dans le groupe comprenant les alcools polyvinyliques ; les polyvinylacétals ; les polyvinylpyrrolidones ; les polysaccharides sous forme soluble dans l'eau tels que les amidons (amylose et amylopectine), les celluloses et leurs dérivés carboxyméthyle, méthyle, hydroxyéthyle, hydroxypropyle, les dextrines et les cyclodextrines ; les protéines telles que la caséine ou le caséinate, la protéine de soja, la gélatine ; les sulfonates de lignine ; les polymères synthétiques tels que l'acide poly(méth)acrylique, les copolymères de (méth)acrylates avec des unités de comonomères à fonction carboxyle, le poly(méth)acrylamide, les acides polyvinylsulfoniques et leurs copolymères solubles dans l'eau ; les sulfonates de mélamine-formaldéhyde, les sulfonates de naphtaline-formaldéhyde, les sulfonates de crésol-formaldéhyde, les copolymères de styrène-acide maléique et d'éther de vinyle-acide maléique.

9. Utilisation de polymères solubles dans l'eau modifiés en tant qu'agents de réticulation selon les revendications 1 à 8, **caractérisée en ce que** la polymérisation est initiée avec un ou plusieurs initiateurs et les initiateurs sont chargés initialement à hauteur de ≥ 20 % en poids, par rapport au poids total des initiateurs utilisés au total lors de la polymérisation, avant l'initiation de la polymérisation, et la partie restante des initiateurs est ajoutée pendant la polymérisation.

10. Utilisation de polymères solubles dans l'eau modifiés en tant qu'agents de réticulation selon les revendications 1 à 9, **caractérisée en ce qu'**au moins 50 % en poids des polymères solubles dans l'eau sont chargés initialement avant l'initiation de la polymérisation, par rapport à la quantité utilisée au total de polymères solubles dans l'eau.

11. Utilisation de polymères solubles dans l'eau modifiés en tant qu'agents de réticulation selon les revendications 1 à 10, **caractérisée en ce que** les monomères a) et b) sont chargés initialement à hauteur de 0 à 20 % en poids, par rapport au poids total des quantités utilisées au total de monomères a) et b), avant l'initiation de la polymérisation, et la quantité résiduelle restante des monomères a) et b) est ajoutée pendant la polymérisation.

12. Utilisation de polymères solubles dans l'eau modifiés en tant qu'agents de réticulation selon les revendications 1 à 11, **caractérisée en ce qu'**un ou plusieurs polymères solubles dans l'eau modifiés sont présents en tant que constituant d'une composition d'agent de réticulation, qui contient en outre un ou plusieurs composants du groupe comprenant les polymères de base, les composants époxyde, les durcisseurs et les additifs.

13. Utilisation de polymères solubles dans l'eau modifiés en tant qu'agents de réticulation selon les revendications 1 à 12, **caractérisée en ce que** les agents de réticulation sont utilisés dans des produits chimiques de construction, dans des agents de revêtement ou des agents adhésifs, notamment pour des textiles tissés ou non tissés, du papier ou des fibres.
